Europäisches Patentamt

European Patent Office

Office européen des brevets

(19)

(11) Numéro de publication: **0 322 315**
**A1**

(12) # DEMANDE DE BREVET EUROPEEN

(21) Numéro de dépôt: 88403275.6

(22) Date de dépôt: 21.12.88

(51) Int. Cl.⁴: **C 22 C 37/06**
**B 21 B 27/00, B 32 B 15/01**

(30) Priorité: 23.12.87 FR 8718073

(43) Date de publication de la demande:
28.06.89 Bulletin 89/26

(84) Etats contractants désignés:
AT BE CH DE ES FR GB GR IT LI LU NL SE

(71) Demandeur: **CHAVANNE KETIN**
**La Défense 9 4, place de la Pyramide**
**F-92800 Puteaux (FR)**

**INSTITUT DE RECHERCHES DE LA SIDERURGIE**
**FRANCAISE**
**5 bis, rue de Madrid**
**F-75008 Paris (FR)**

(72) Inventeur: **Werquin Jean-Claude**
**342 avenue Jean Jaurès**
**59790 Ronchin (FR)**

**Enrique José**
**43 Le Touraine**
**59620 Aulnoye (FR)**

(74) Mandataire: **Kohn, Philippe et al**
**c/o CABINET LAVOIX 2, place d'Estienne d'Orves**
**F-75441 Paris Cédex 09 (FR)**

(54) **Cylindre de travail composite bimétallique.**

(57) L'invention est relative à un cylindre de travail composite bimétallique. Son enveloppe externe de travail est constituée par un alliage contenant du fer, du carbone vanadium, du chrome et du molybdène, le domaine de composition de l'alliage représenté dans un diagramme carbone-vanadium, étant délimité par un quadrilatère dont les côtés sont :

a) la ligne d'ordonnée constante V = 3 % en poids ;
b) la ligne d'abscisse constante C = 3 % en poids ;
c) la ligne péritectique séparant les domaines des phases δ et γ ; et
d) une ligne droite déterminant la teneur en vanadium maximale admissible passant par deux points de coordonnées respectives C = 1,8 % - V = 6 %, et C = 3 % - V = 4,5 % ; et son coeur est en fonte nodulaire.

## Description

### Cylindre de travail composite bimétallique

La présente invention a pour objet un cylindre de travail bimétallique de laminoir.

Elle vise plus particulièrement un cylindre de travail destiné à équiper notamment les cages finisseuses d'un train à bandes à chaud ainsi que les cages quarto à tôles fortes.

Un cylindre de travail selon la présente invention peut également concerner les cylindres finisseurs de travail pour laminoir à bandes à froid.

Les principaux critères connus que doivent remplir les cylindres de travail à chaud sont les suivants :
- la morphologie de la phase carbure doit être satisfaisante, c'est-à-dire présenter un degré de dissociation suffisante ;
- la cinétique d'oxydation, notamment dans les conditions de laminage de la dernière cage, c'est-à-dire à des températures égales à environ 500°C, doit être suffisante ;
- la limite élastique à chaud doit être la plus élevée possible pour résister au fluage superficiel et aux enfonçures.

Les demandes de brevet français n° 79 27952 et 86 10216 décrivent des structures de cylindres de travail dans lesquelles on a tenté de cumuler ces divers critères par un choix judicieux de la teneur en poids du carbone, du chrome, et du molybdène, ceci afin d'ajuster la morphologie des carbures eutectiques $M_7C_3$ ou $Mo_2C$.

La demande de brevet allemand DE-A-32 36 268 mentionne une composition particulièrement résistante à l'usure et à la fatigue thermique utilisant le vanadium comme élément carburigène.

Les compositions qui y sont mentionnées sont prévues pour être utilisées sous forme de bagues monobloc coulées statiquement et montées mécaniquement sur un arbre en vue de leur utilisation pour le laminage à chaud de fils.

Cette solution n'est pas techniquement et économiquement utilisable dans le cas du laminage des produits plats qui requiert des cylindres de grandes dimensions dont le diamètre est compris entre 600 et 1200 mm et dont la longueur de table est comprise entre 1500 et 4500 mm.

Un cylindre de travail pour la production de produits plats subit des pressions très importantes, pouvant atteindre 1000 tonnes/mètre de table, et doit en conséquence avoir un coeur résilient, peu déformable, ne présentant aucun défaut de cristallisation, et qui soit capable également d'encaisser les tensions internes induites par la présence du métal de table formant enveloppe du coeur, dont la fonction est de résister à l'usure et à la fatigue thermique.

En raison même de l'existence des phénomènes de tensions internes, et notamment de la contrainte de traction radiale, la liaison entre le métal de l'enveloppe et le métal du coeur doit être parfaite et ne doit présenter ni retassures, ni ségrégations de carbures qui la fragiliseraient. De tels défauts ne sont pas admissibles car ils risquent de conduire, en utilisation, à la séparation des deux métaux avec des conséquences économiques très importantes dans le cas d'un laminoir travaillant par exemple à plus de 1000 m/minute.

Pour la constitution du coeur, le métal le plus intéressant couramment utilisé est la fonte nodulaire. Lorsque les métaux d'enveloppe sont fortement alliés, seule la technologie de coulée centrifuge, et notamment celle de la coulée centrifuge à axe vertical, permet d'obtenir une liaison parfaite entre le coeur et l'enveloppe.

Jusqu'à présent les alliages à haute teneur en vanadium n'ont pu être utilisés en combinaison avec la fonte nodulaire en raison d'une particularité qui leur est propre et qui est dûe à une caractéristique spécifique du carbure de vanadium.

En effet le carbure de vanadium est plus léger que le liquide dont il est issu. Cette caractéristique, bien connue pour les alliages hypereutectiques pour lesquels la cristallisation débute par le carbure $VC_{1-x}$ dont la densité est de 5,5, et donc inférieure à celle du liquide dont la densité est environ égale à 7,5.

Les pièces fabriquées à partir de ces alliages présentent systématiquement une concentration de carbure primaire $VC_{1-x}$ dans la masselotte de coulée.

Cependant lorsqu'on utilise des alliages dont la composition initiale se situe dans la boucle gamma du diagrame carbone vanadium, il n'y a théoriquement plus de formation de carbure primaire de type VC et le chemin de cristallisation suit la séquence suivante :
$$\text{liquide} \rightarrow \gamma \rightarrow (\gamma + VC) \text{ eutectique} \rightarrow \gamma + VC + M_xC_y.$$

Le carbure eutectique VC se formant dans une austénite déjà fortement consolidée, il ne peut plus se déplacer sous l'effet des forces de gravité et centrifuges, il n'y a donc plus de ségrégation.

Ce schéma théorique simple ne tient pas compte de la ségrégation mineure, et les couches liquides enrichies en carbone et en vanadium qui se trouvent dans le sillon interdendritique peuvent alors donner directement naissance à des carbures primaires $VC_{1-x}$ que la force centripète entraîne instantanément vers la paroi interne. Ainsi, la coulée centrifuge aggrave considérablement le phénomène de ségrégation et cela a deux conséquence majeures sur la combinaison bimétallique nécessaire à la fabrication d'un cylindre de train à bandes.

Tout d'abord, les carbures primaires VC ségrégés forment une couche extrêment riche en vanadium, dont la teneur peut atteindre 15 %, dont le solidus est très élevé et en tout cas plus élevé que celui du métal de base. Ceci a pour conséquence de provoquer une interruption dans le renourrissage normalement continu de retrait liquide par les masselottes et se traduit par de nombreuses microporosités qui rendent les couches touchées par ce phénomène impropre au laminage.

Enfin, la très haute teneur en vanadium de la paroi interne et sa température de solidus élevée provoque, dans la zone de liaison, la formation dense de carbures de type M3C qui fragilisent la liaison et peuvent conduire à la séparation brutale des deux métaux sous l'effet conjugué des tensions internes et des forces de laminage mécaniques et thermiques.

Afin de remédier aux inconvénients qui viennent d'être mentionnés, la présente invention propose un cylindre de travail composite bimétallique caractérisé en ce que l'enveloppe externe de travail est constituée par un alliage contenant du fer, du carbone, du vanadium, du chrome et du molybdène, le domaine de composition de l'alliage, représenté dans un diagramme carbone-vanadium, étant délimité par un quadrilatère dont les côtés sont :

a) La ligne d'ordonnée constante V = 3 % en poids ;

b) la ligne d'abscisse constante C = 3 % en poids ;

c) la ligne péritectique séparant les domaines des phases $\delta$ et $\gamma$ ; et

d) une ligne droite déterminant la teneur en vanadium maximale admissible passant par deux points de coordonnées respectives C = 1,8 % - V = 6 %, et C = 3 % - V = 4,5 % ; et en ce que le coeur du cylindre est en fonte nodulaire.

Conformément à l'invention une étude du diagramme de constitution des alliages fer-carbone-vanadium, et notamment des compositions situées dans la boucle $\gamma$ de ce diagramme ont permis de mettre en évidence un domaine de compositions spécifiques dans lequel les alliages présentent un cumul des propriétés suivantes :
- présence d'un eutectique dissocié ;
- oxydabilité de la matrice ;
- dureté à chaud élevée ; et
- absence de ségrégation de carbure VC.

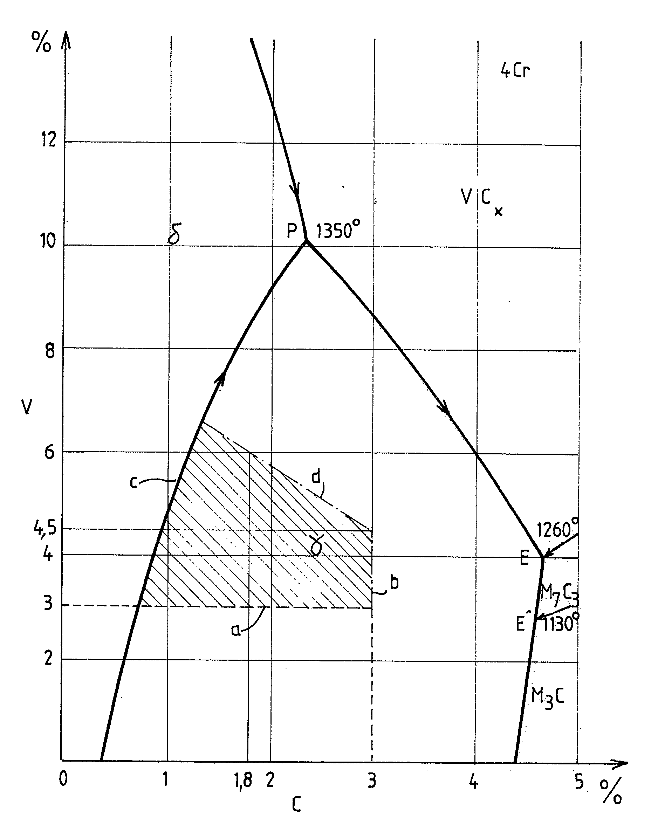

Le domaine de composition de l'alliage, fonte ou acier, conforme à l'invention qui vient d'être défini est représenté, par une zone hachurée, à la figure 1 du dessin annexé à la présente demande.

L'eutectique $\gamma$ -VC est particulièrement bien dissocié et conduit même à l'obtention de carbures dont les formes sont arrondies et qui présentent une résistance maximum aux bris et aux micro-écaillages. Cet eutectique qui se situe, pour les compositions les plus carburées, à l'intérieur du réseau M7C3 vient considérablement renforcer la résistance à l'usure de la matrice.

Pour les compositions les moins carburées, cet eutectique est rejeté au joint du grain $\gamma$ mais toujours avec des formes arrondies et bien dissociées.

Les eutectiques $\gamma$ -M7C3 et $\gamma$ -M2C sont également dissociés. Par contre l'eutectique $\gamma$ -M3C, peu, dissocié, présente une fragilité et possède une massivité qui facilite le phénomène bien connu de banding. Pour cette raison, conformément à l'invention, il est important qu'outre une certaine teneur en chrome minimum, comprise entre 2 et 5 % en poids, nécessaire à la formation de l'eutectique M7C3, la teneur en vanadium soit supérieure à 3 %. La teneur en chrome choisie permet d'obtenir une bonne oxydabilité de la matrice.

Des essais menés à l'aide d'une mini-centrifugeuse, pouvant travailler avec des accélérations de 150 g, ont permis de définir pour différentes teneurs en carbone, le vanadium "critique" c'est-à-dire la teneur en vanadium maximale admissible dans la composition du diagramme fer-carbone-vanadium dans lequel la compétition entre la croissance de l'austénite et l'enrichissement en vanadium du sillon interdendritique empêche la formation du carbure primaire VC $_{1-x}$.

Ainsi pour des teneurs en carbone d'environ 1 %, le vanadium maximum de 5 % ne conduit pas à la ségrégation. Une teneur plus élevée conduirait de toute façon dans le domaine $\delta$ qui doit être évité si l'on veut obtenir une dureté suffisante à chaud.

Il n'est pas non plus souhaitable de dépasser une teneur supérieure à 3 % en poids de carbone, afin d'éviter que la quantité d'eutectiques $\gamma$ -VC diminue fortement au profit de l'eutectique $\gamma$ -M3C qui perd alors son caractère dissocié.

Des ajouts d'éléments d'alliage doivent être apportés à la composition de base de l'alliage à haute teneur en vanadium, en acier ou en fonte, sans en modifier la structure eutectique, ni augmenter la température du point A1 afin d'obtenir la trempabilité dans le domaine considéré, la résistance à l'oxydation et les caractéristiques mécaniques après revenu.

Il est ainsi nécessaire de limiter à 3 % en poids la teneur de l'alliage en molybdène qui améliore l'aptitude à la trempe et permet d'obtenir une dureté à chaud élevée mais qui a tendance à provoquer la formation d'un eutectique $\gamma$ - Mo2C.

De même la teneur de l'alliage doit être limitée à 1 % en poids de silicium qui améliore la résistance à l'oxydation de l'alliage mais qui tend à lui donner une structure eutectique en "écriture chinoise" et qui en diminue l'aptitude à la trempe.

De la même façon, c'est pour éviter la formation excessive de l'eutectique $\gamma$ - M7C3 ainsi qu'une résistance excessive à l'oxydation, que la teneur en chrome, qui est ajouté pour son influence favorable sur l'aptitude à la trempe, doit être limitée à 5 %.

On décrira maintenant deux exemples de réalisation de cylindres de travail conformes aux enseignements de l'invention :

Example 1

Ce premier exemple concerne un cylindre de travail utilisé dans les premières cages finisseuses (F1 F4) dans lesquelles le banding est le phénomène d'usure le plus grave.

Il concerne la réalisation d'un cylindre de travail de 745 mm de diamètre et de 2040 mm de longueur de table.

En raison du critère prioritaire de tenue de l'état de surface, on utilise dans cet exemple une teneur en carbure primaire minimum, c'est-à-dire inférieure à 10 %. La composition du métal de l'enveloppe est la suivante:
C = 0,98; Si = 0,96; Mn = 0,90; P = 0,024; S = 0,016; Ni = 1,01; Cr = 5,22; Mo = 1; V = 4,23; et Cu = 1,98.

La composition du métal du coeur est la suivante:
C = 2,92; Si = 2,65; Mn = 0,35; S = 0,008; P = 0,040; Cr = 0,12; Ni = 0,53; et Mg = 0,065.

Le cylindre est réalisé par la technique de coulée par centrifugation d'axe vertical. Aucune ségrégation de carbure VC n'est visible à la liaison des deux métaux. En raison de l'extrême oxydabilité à haute température des alliages à haute teneur en vanadium et des températures de trempe élevées exigées, il a été pratiqué un double traitement subcritique à 500°C, qui permet d'obtenir une dureté finale comprise entre 78 et 82 ShC et une teneur en austénite résiduelle inférieure à 10 %.

Le choix des éléments d'alliage a été fait en fonction des critères suivants :

Carbone : il détermine essentiellement la proportion de carbures eutectiques de type VC. Dans l'exemple considéré il est choisi minimum, c'est-à-dire à la limite de formation de ferrites $\delta$, et pour une teneur en carbure VC d'environ 5 %, correspondant à un degré maximum de dissociation. Pour l'application considérée, il est recommandé de ne pas dépasser 15 %.

Silicium : il est limité à 1 % en raison de la tendance à disposer les carbures eutectiques VC en écriture chinoise, mais il doit être égal à au moins 0,5 % en raison de son rôle désoxydant.

Manganèse : il est au moins égal à 0,6 % en raison de son rôle désoxydant, mais limité à 2 %,. Il est préférable d'utiliser l'effet gammagène du cuivre et du nickel, à la fois pour éviter la formation de ferrite $\delta$ et de la perlite. Une teneur plus élevée en manganèse aurait des effets défavorables sur la morphologie des carbures.

Nickel et cuivre : ils sont utilisés l'un et l'autre comme éléments gammagènes. Ils permettent d'éviter la formation de perlite à l'état brut de coulée, ce qui permet ensuite un traitement subcritique. La teneur en cuivre plus nickel est de l'ordre de 3,5 % pour un cylindre d'un diamètre de 800 mm. Elle serait de 4,5 % pour un diamètre de 1100 mm et de 2,5 % pour un diamètre de 500 mm.

Le cuivre est préféré au nickel en raison de son absence d'influence sur la morphologie du carbure eutectique VC.

Molybdène : il a également une influence sur la formation de la perlite, qu'il évite tout en améliorant la résistance à chaud. Sa teneur est limitée à 3 % afin d'éviter la formation de l'eutectique Mo2C qui est particulièrement fragile.

Chrome : il est à sa limite supérieure de 5 % car les premières cages sont relativement chaudes et doivent donc être protégées contre l'oxydation.

En essai sur simulateur d'usure, ce nouveau type de composition du matériau d'enveloppe a permis de réduire l'usure, de 5 microns (cylindres traditionnels en fonte à haute teneur en chrome) à 1,2 microns, pour la cage 1 ; et en cage F4 de 10 microns à 1,8 microns. L'état de surface de laminage obtenu est d'une qualité remarquable et l'usure en est très faible. L'amélioration ainsi obtenue est donc particulièrement importante.

### Example 2

Ce second exemple concerne la réalisation d'un cylindre de travail pour les dernières cages finisseuses (F5 - F7) dans lesquelles l'usure se traduit essentiellement par une perte de profil. Il concerne la réalisation d'un cylindre de travail de 775 mm de travail et de 2286 mm de longueur de table.

En raison de la priorité donnée ici à la tenue du profil on recherche, par cette composition, une forte teneur en carbure eutectique c'est-à-dire supérieure à 20 %.

La composition du métal de l'enveloppe est la suivante:
C = 2,51; Si = 0,88; Mn = 1,22; S = 0,016; P = 0,050; Cr = 3,61; Ni = 1,60; Mo = 2,08; V = 4,00; et Cu = 2,00.

La composition du métal du coeur est la suivante:
C = 3,02; Si = 2,55; Mn = 0,40; S = 0,008; P = 0,032; Cr = 0,08; Ni = 0,47; et Mg = 0,055.

Le cylindre de travail est également réalisé par coulée par centrifugation d'axe vertical. Aucune ségrégation de carbure VC n'est visible à la liaison entre les deux métaux. Comme précédemment le cylindre subit un double traitement de revenu subcritique à 510°C, qui permet d'obtenir une dureté finale comprise entre 80 et 85 ShC et une teneur en austénite résiduelle de l'ordre de 10 %.

Le choix des teneurs des différents éléments d'alliage du matériau d'enveloppe est fait selon les mêmes critères que ceux mentionnés dans le premier exemple, à l'exception du carbone, qui est ici choisi pour obtenir une plus grande quantité de carbure VC et M7C3.

La teneur en chrome est choisie voisine de sa limite inférieure, afin de faciliter la formation du film d'oxyde qui a quelques difficultés à se former en cage F7, en raison d'une température de contact cylindre-tôle assez faible (450°C).

En essai sur simulateur d'usure, ce nouveau type de matériau de cylindre de trains à bande fait passer l'usure en cage F5 de 12 microns à 3,5 microns et en cage F7 de 6 microns à 4 microns, la comparaison étant faite avec la nuance traditionelle de fonte à trempe indéfinie. L'amélioration de la qualité de laminage est particulièrement importante et ce notamment en cage F5.

### Revendications

1. Cylindre de travail composite bimétallique caractérisé en ce que l'enveloppe externe de travail est constituée par un alliage contenant du fer, du carbone, du vanadium, du chrome et du molybdène, le domaine de composition de l'alliage représenté dans un diagramme carbone-vanadium, étant délimité par un quadrilatère dont les côtés sont :

a) la ligne d'ordonnée constante V = 3 % en poids ;

b) la ligne d'abscisse constante C = 3 % en poids ;

c) la ligne péritectique séparant les domaines des phases $\delta$ et $\gamma$ ; et

d) une ligne droite déterminant la teneur en vanadium maximale admissible passant par deux points de coordonnées respectives C = 1,8 % - V = 6 %, et C = 3 % - V = 4,5 % ;

et en ce que le coeur du cylindre est en fonte nodulaire.

2. Cylindre de travail selon la revendication 1 caractérisé en ce que la teneur en chrome de l'alliage est comprise entre 2 et 5 % en poids.

3. Cylindre de travail selon l'une des revendications 1 ou 2 caractérisé en ce que la teneur en molybdène de l'alliage est inférieure à 3 % en poids.

4. Cylindre de travail selon l'une quelconque des revendications 1 à 3 caractérisé en ce que la teneur en silicium de l'alliage est inférieure à 1 % en poids.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 9, no. 282 (M-428)[2005], 9 novembre 1985; & JP-A-60 124 407 (KUBOTA TEKKO K.K.) 03-07-1985 --- | 1 | C 22 C  37/06 B 21 B  27/00 B 32 B  15/01 |
| A | PATENT ABSTRACTS OF JAPAN, vol. 10, no. 218 (M-503)[2274], 30 juillet 1986, page 71 M 503; & JP-A-61 56 711 (HITACHI LTD) 22-03-1986 --- | 1 | |
| A | DE-A-2 415 044  (HITACHI) --- | | |
| A | GB-A- 568 888  (THE MOND NICKEL) ----- | | |

|  | DOMAINES TECHNIQUES RECHERCHES (Int. Cl.4) |
|---|---|
|  | C 22 C B 32 B B 21 B |

Le présent rapport a été établi pour toutes les revendications

| Lieu de la recherche | Date d'achèvement de la recherche | Examinateur |
|---|---|---|
| LA HAYE | 13-03-1989 | OBERWALLENEY R.P.L.I. |

EPO FORM 1503 03.82 (P0402)